# FASCICULE DE BREVET EUROPEEN

(11) **EP 1 997 354 B1**
(45) Date de publication et mention de la délivrance du brevet: **17.02.2010**
(21) Numéro de dépôt: 07731797.2
(22) Date de dépôt: 22.03.2007
(51) Int. Cl.: H05B 37/02

(54) **PROCEDE DE GESTION D'UN RESEAU D'ECLAIRAGE ET DISPOSITIF ASSOCIE**
VERFAHREN ZUR VERWALTUNG EINER BELEUCHTUNGSSCHALTUNG UND ENTSPRECHENDE VORRICHTUNG
METHOD FOR MANAGING A LIGHTING CIRCUIT, AND ASSOCIATED DEVICE

(30) Priorité: 22.03.2006 FR 0650986
(43) Date de publication de la demande: 03.12.2008
(73) Titulaire: Lyracom, 33650 Martillac (FR)
(72) Inventeur: PETIT, Michel, F-33610 Canejan (FR); URRUTIA, Stéphane, F-33880 Baurech (FR); MICHON, Hervé, F-33000 Bordeaux (FR); BERNEX, Jean-Marc, F-33113 Saint Symphorien (FR); MIRANDE-IRIBERRY, Philippe, F-33200 Bordeaux (FR)
(74) Mandataire: Fantin, Laurent
(86) Numéro de dépôt international: PCT/FR2007/050984
(87) Numéro de publication internationale: WO 2007/107677

(56) Documents cités:
- EP-A1- 1 251 721
- EP-A2- 1 435 678
- WO-A-01/11926
- WO-A-2004/100617
- FR-A1- 2 814 318
- GB-A- 2 303 943
- US-A- 6 121 875
- US-A1- 2002 175 641
- US-A1- 2004 181 372
- US-B1- 6 307 331

## Description

La présente invention est relative à un procédé de gestion d'un réseau d'éclairage, notamment public et au dispositif développé pour sa mise en oeuvre.

L'éclairage public est un des premiers consommateurs d'électricité. Pour donner un ordre d'idée, le parc existant en France est d'environ un point lumineux pour dix habitants.

Généralement, la commande dudit éclairage public est effectuée par une horloge et/ou un capteur de luminosité, notamment une cellule photovoltdique, mesurant l'ensoleillement.

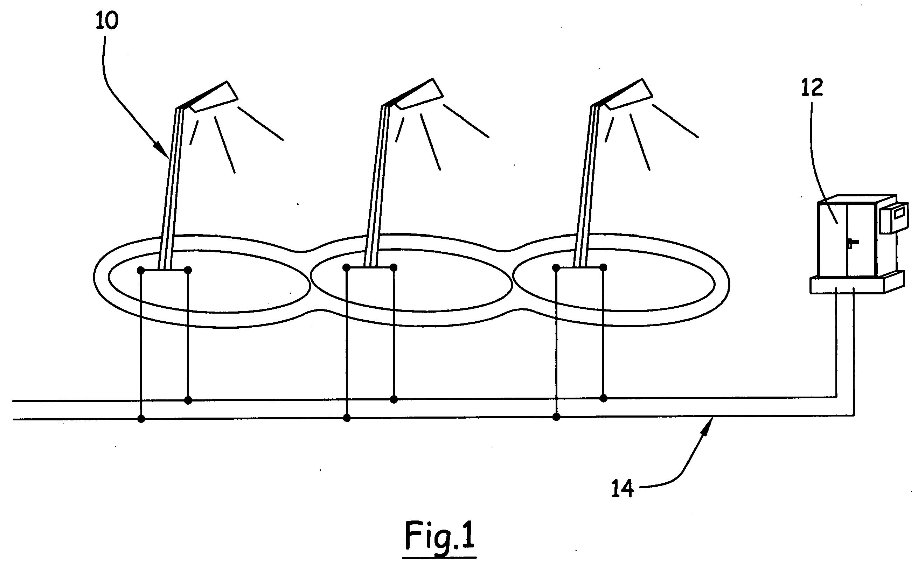

La figure 1 représente un réseau d'éclairage selon l'art antérieur, composé de points lumineux 10, notamment des lampadaires, couramment utilisé pour l'éclairage public des voies de circulation et des villes.

Ledit réseau d'éclairage est piloté par des moyens de commande 12 susceptibles de gérer au moins un circuit de puissance 14 destiné à fournir l'énergie électrique aux points lumineux 10. Selon la plupart des dispositifs de l'art antérieur, les moyens de commande 12 se limitent à un fonctionnement de type « Tout Ou Rien » consistant simplement à commuter le réseau d'éclairage entre l'état « allumé » et l'état « éteint » en se basant sur les informations relatives à un point de mesure de luminosité et/ou une horloge avec des horaires paramétrés.

Les points lumineux sont donc situés les uns après les autres sur au moins un tracé continu, correspondant au circuit de puissance 14 du réseau d'éclairage, chaque point lumineux 10 ayant une position définie et identifiable sur le tracé auquel il appartient.

Selon le modèle français, un seul capteur de luminosité sert de référence pour l'allumage ou l'extinction de tout un secteur de l'éclairage public d'une ville soit tout un groupe de points lumineux répartis sur une zone à éclairer. Ce procédé ne peut tenir compte des parties de la zone à éclairer où l'ensoleillement baisse plus rapidement en raison des obstacles ou du relief. La qualité de l'éclairage public réalisé par ce procédé n'est pas optimale car certaines parties de la zone à éclairer peuvent être momentanément plongées dans une semi-obscurité lors du crépuscule ou de l'aurore sous un soleil rasant.

Selon le modèle nnglo-saxon, un capteur de luminosité est associé à chaque point lumineux et un interrupteur commande son allumage et son extinction en fonction de l'ensoleillement. Chaque partie de la zone à éclairer bénéficie d'un éclairage adapté à ses propres conditions de luminosité. Cependant, il demeure un problème de synchronisation lors de l'allumage ou de l'extinction des points lumineux disposés sur une zone à éclaireur. D'autre part, dans ces procédés de gestion peu soucieux des économies d'énergie, les dispositifs associés à chaque point lumineux ne sont pas autonomes, provoquant soit une surconsommation d'énergie sur le réseau, soit une pollution due à l'utilisation de sources d'énergie non renouvelable, telles des piles ou des batteries. Un réseau d'éclairage similaire est connu du document EP-1435678 A2.

De plus, les procédés actuels de gestion du réseau d'éclairage public ne permettent pas de gérer l'éclairage d'une zone à éclairer en fonction de l'activité présente sur les lieux. Ainsi de nombreux points lumineux situés dans des zones à éclairer n'ayant que peu voire aucune activité ou fréquentation nocturnes, telles les zones industrielles ou commerciales, éclairent des lieux déserts une grande partie de la nuit, l'éclairage dans ces zones n'étant utile qu'au début et à la fin de la nuit.

Une autre problématique relative à la qualité de service de l'éclairage public concerne la maintenance des réseaux d'éclairage, les procédés de gestion des réseaux d'éclairage public susceptibles de surveiller chaque point lumineux indépendamment, notamment ceux utilisant une technologie à courant porteur, ont des fonctions limitées qui fournissent peu d'informations relatives à l'éclairage fourni par chaque point lumineux, ils se limitent à détecter l'absence d'un ou plusieurs points lumineux sur le réseau d'éclairage sans localiser les points lumineux défaillants ou sans contrôle possible de la qualité d'éclairage de chaque point lumineux. L'absence d'éclairage étant reconnue comme une cause d'accident de la route pour laquelle la responsabilité des personnes en charge dudit réseau d'éclairage peut être engagée, le procédé de gestion du réseau d'éclairage devrait disposer de moyens de détection et de localisation d'une défaillance d'un point lumineux, les plaintes des habitants signalant bien souvent les pannes avant que le service ou l'entreprise en charge du réseau d'éclairage n'effectue les réparations.

Aussi, la présente invention vise à pallier les inconvénients de l'art antérieur et à améliorer la qualité de service de l'éclairage public tout en réalisant des économies d'énergie grâce à un procédé de gestion optimisé d'un réseau d'éclairage.

Selon un premier objectif, la gestion du réseau est optimisée en synchronisant l'allumage et l'extinction des points lumineux d'une zone à éclairer en fonction des mesures de luminosité effectuées sur ladite zone à éclairer.

Selon un autre objectif, la gestion du réseau est optimisée en facilitant la maintenance dudit réseau d'éclairage.

Selon un autre objectif, la gestion du réseau est optimisée en fournissant une luminosité à intensité variable en fonction des besoins.

A cet effet, l'invention a pour objet un procédé de gestion d'un réseau d'éclairage comprenant des points lumineux disposés sur une zone à éclairer et reliés à des moyens de commande centralisés dudit réseau d'éclairage, ledit réseau d'éclairage étant équipé d'un dispositif comprenant au moins une unité autonome de mesure de luminosité au niveau de chaque point lumineux dudit réseau, ledit procédé étant **caractérisé en ce que**, les étapes consistent à :
- effectuer au moins une mesure de luminosité en chaque point lumineux grâce aux moyens de mesure de luminosité :

- communiquer ladite au moins une mesure de luminosité effectuée par les moyens de mesure de luminosité en chaque point lumineux aux moyens de commande dudit réseau d'éclairage ;
- faire varier, grâce aux moyens de commande centralisés et de manière synchronisée, l'intensité de la luminosité fournie par chacun des points lumineux du réseau d'éclairage en fonction des mesures de luminosité effectuées en chaque point lumineux.

L'invention comprend également le dispositif pour la mise en oeuvre de ce procédé, notamment pour l'installation et l'utilisation dudit procédé sur un réseau d'éclairage existant.

D'autres caractéristiques et avantages ressortiront de la description qui va suivre de l'invention, description donnée à titre d'exemple uniquement, en regard des dessins annexés sur lesquels :
- la figure 1 représente un réseau d'éclairage selon l'art antérieur;
- la figure 2 représente un réseau d'éclairage d'une zone A à éclairer par des points lumineux 10 équipés du dispositif associé au procédé de gestion,
- la figure 3 illustre le procédé de détection de défaut d'allumage d'un point lumineux 10,
- la figure 4 représente la composition d'une unité autonome selon un mode de réalisation,
- la figure 5 est une vue en perspective illustrant les éléments composant une unité autonome,
- les figures 6A et 6B représentent le circuit imprimé et le module d'une unité autonome selon son mode de réalisation préférentiel,
- la figure 7 représente le protocole de communication.

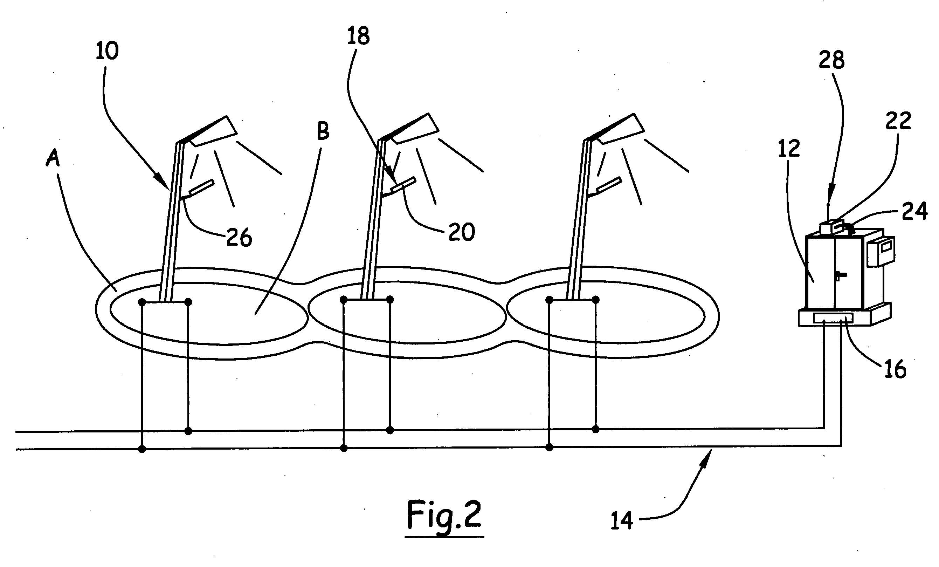

Comme illustré en figure 2, un réseau d'éclairage, susceptible d'être géré par le procédé de gestion selon l'invention, comprend des points lumineux 10, notamment des lampadaires comprenant au moins une lanterne d'éclairage, disposés le long d'un ou plusieurs circuits de puissance 14 pilotés par des moyens de commande 12 centralisés, disposés en un point unique et généralement situés de façon à pouvoir piloter plusieurs circuits de puissance.

Ledit réseau d'éclairage est destiné à l'éclairage d'une zone A à éclairer. La zone A est définie par l'union des zones B éclairées par le champ de lumière de chaque point lumineux 10.

Par la suite, on limitera la description à un seul circuit de puissance 14 commandé par lesdits moyens de commande 12, le terme réseau d'éclairage désignant dès lors des points lumineux 10 répartis sur le circuit de puissance 14.

En vue de l'installation et de l'utilisation dudit procédé de gestion, le réseau d'éclairage est équipé d'un dispositif communicant disposant de moyens de mesure de luminosité 18 en chaque point lumineux 10 dudit réseau.

Selon l'invention, ledit procédé de gestion comprend les étapes suivantes :
- effectuer au moins une mesure de luminosité en chaque point lumineux grâce aux moyens de mesure de luminosité 18 du dispositif communicant;
- communiquer ladite au moins une mesure de luminosité effectuée par les moyens de mesure de luminosité 18 en chaque point lumineux 10 aux moyens de commande 12 dudit réseau d'éclairage;
- faire varier, grâce aux moyens de commande centralisés et de manière synchronisée, l'intensité de la luminosité fournie par les points lumineux 10 du réseau d'éclairage en fonction des mesures de luminosité effectuées en chaque point lumineux 10.

Le dispositif communicant permettant les mesures de luminosité est composé d'au moins une unité autonome 20 par point lumineux 10 dudit réseau d'éclairage et d'au moins un coordonnateur 22, susceptible de communiquer directement ou indirectement avec lesdites unités autonomes 20 et relié aux moyens de commande 12 dudit réseau d'éclairage.

D'une part, l'unité autonome 20 est de préférence indépendante du circuit de puissance 14 pour que l'utilisation du présent procédé de gestion de l'éclairage ne provoque pas de surconsommations du réseau d'éclairage lors du fonctionnement du dispositif communicant, et d'autre part, pour ne subir aucune perturbation liée à d'éventuelles interférences sur ledit circuit de puissance 14 lors de la communication avec le coordonnateur 22, comme peuvent le subir, par exemple, les systèmes à courant porteur.

Afin de s'adapter à un réseau d'éclairage existant, le coordonnateur 22 du dispositif communicant dispose de moyens de couplage 24 avec les moyens de commande 12 du réseau d'éclairage et lesdites unités autonomes 20 disposent de moyens de fixation 26 sur le point lumineux 10, notamment un poteau de lampadaire.

En variante, pour de nouvelles installations, l'unité 20 susceptible de communiquer avec le coordonnateur 22 peut être intégrée dans le candélabre. Dans ce cas, l'unité 20 peut être alimentée par le circuit de puissance 14 mais communique sans utiliser le circuit de puissance 14.

Le coordonnateur est équipé de moyens de communication 28, aptes à communiquer directement ou indirectement avec lesdites unités autonomes 20.

Chaque unité autonome 20 dispose de moyens de mesure de luminosité 18 et de moyens de communication 30, susceptibles de communiquer avec le coordonnateur 22 et/ou une autre unité autonome 20.

Ainsi, les informations relatives à la luminosité en chaque point lumineux 10 sont transmises au coordonnateur 22 qui peut ensuite traiter lesdites informations en fonction de ses paramètres intrinsèques. Ces paramètres intrinsèques sont notamment fixés par le technicien lors de l'installation dudit procédé sur le réseau d'éclairage et susceptibles d'être modifiées par la suite pour optimiser le procédé de gestion grâce aux possibilités d'apprentissage. Ledit apprentissage offert par le procédé de gestion de l'invention est basé sur des moyens de mise en mémoire 32 des données mesurées, propres à chaque unité autonome 20, qui seront développés ultérieurement dans la description.

Selon un premier mode de réalisation de l'unité autonome du dispositif communicant, chaque unité autonome comprend donc des moyens de mesure de luminosité 18, notamment un panneau photovoltaïque ou panneau solaire, renvoyant des données concernant au moins une mesure de luminosité effectuée dans sa zone B respective, d'où une mesure de luminosité point par point. La mesure de luminosité effectuée en chaque point lumineux est une mesure de luminosité pouvant correspondre à différentes sources de luminosité. Ainsi, une mesure de luminosité en un point lumineux peut englober une mesure de l'ensoleillement et une mesure de la luminosité fournie par le point lumineux.

Après avoir regroupé les données relatives à la luminosité mesurée en chaque point lumineux et en fonction de ses paramètres intrinsèques, le coordonnateur 22 peut calculer un indice de luminosité global et donc en déduire un indice d'ensoleillement global, correspondant à l'ensoleillement de la zone A à éclairer par ledit réseau d'éclairage. A partir du suivi de l'évolution de cet indice d'ensoleillement global va découler l'ordre transmis par le coordonnateur 22, via les moyens de couplage 24, aux moyens de commande 12 du circuit de puissance 14 du réseau. Concrètement, en suivant l'évolution dudit indice d'ensoleillement global, le coordonnateur 22 peut piloter un allumage ou une extinction des points lumineux lors du coucher ou du lever du soleil, ou bien, ledit coordonnateur peut faire varier l'intensité lumineuse fournie par les points lumineux du réseau d'éclairage.

Ce premier mode de réalisation de l'unité autonome 20 du dispositif communicant offre donc la possibilité de transmettre, via les moyens de couplage 24, un ordre aux moyens de commande 12 du réseau permettant de faire varier l'intensité lumineuse en fonction d'une mesure point par point de 1"éclairage. L'avantage, par rapport aux procédés de gestion de l'art antérieur, étant de fournir aux moyens de commande 12 du réseau une mesure beaucoup plus globale et proche de l'ensoleillement. De plus, selon les paramètres intrinsèques du coordonnateur 22 indiqués lors de l'installation du procédé sur un réseau d'éclairage, la fonction permettant de calculer l'indice d'ensoleillement global peut tenir compte de l'amplitude entre les mesures minimales et maximales effectuées sur toute la zone A à éclairer, mais aussi de pondérer un certain panel de valeurs parmi les mesures de luminosité des zones B effectuées suivant la qualité d'éclairage souhaitée sur la zone A à éclairer. Il suffit, par exemple, d'appliquer des coefficients de pondération aux mesures de luminosité de façon à diminuer sensiblement plus tard la luminosité fournie par le réseau d'éclairage lors de l'aurore ou à augmenter la luminosité fournie sensiblement plus tôt lors du crépuscule.

Toujours grâce à ce premier mode de réalisation de l'unité autonome 20 du dispositif communicant et grâce aux moyens de commande 12 du réseau d'éclairage permettant de faire varier l'intensité lumineuse, il est possible de mettre en oeuvre une gestion de l'éclairage dite à gradation paramétrable. Ladite gestion à gradation paramétrable de l'éclairage est obtenue suivant trois lois basées sur la longueur de la nuit: une loi de proportionnalité, une loi à durée fixe, une loi à heure fixe. La gradation paramétrable est programmable entre deux paliers, un seuil d'éclairage maximum et un seuil d'éclairage minimum. Les valeurs maximum sont utilisées au début de la nuit et à la fin de la nuit lors des périodes d'activité importante. Les valeurs minimum sont utilisées lors du creux de la nuit en période d'activité réduite. La puissance lumineuse lors des transitions est graduelle pour éviter un changement brutal de la luminosité ambiante. On peut citer, par exemple, différentes gradations paramétrables :
- la gradation à durée fixe, les paliers à éclairage maximum sont constants au cours de l'année,
- la gradation à heure fixe, les transitions d'éclairage se font à la même heure au cours de l'année,
- la gradation proportionnelle, au cours de l'année, la nuit est divisée en quartier dont la longueur varie avec la durée de la nuit.

La mise en place d'une gestion de l'éclairage à gradation paramétrable a pour but principal d'économiser l'énergie électrique consommée par le réseau d'éclairage, mais elle peut aussi améliorer le confort des habitants éventuellement gênés par ledit éclairage pendant la nuit.

Selon un deuxième mode de réalisation amélioré de l'unité autonome 20 du dispositif communicant, chaque unité autonome 20 dispose, en plus des moyens de mesure de luminosité, de moyens de détection de défaut, susceptibles de détecter un défaut du point lumineux 10 où se trouve fixée ladite unité autonome.

Selon une première variante de la détection de défaut d'un point lumineux 10, l'unité autonome dispose de moyens de détection d'un défaut de fonctionnement du point lumineux lorsque ce dernier est allumé. Cette détection est basée sur une observation de la fréquence du signal lumineux émis par le point lumineux. En effet, la fréquence du signal d'un point lumineux 10 en parfait état correspond sensiblement à la fréquence de la tension de son alimentation électrique, soit celle du circuit de puissance 14. Dès lors, en effectuant une série de mesures de luminosité sur un intervalle de temps sensiblement plus long qu'une période du signal de l'alimentation électrique et en comparant la dite série de valeurs mesurées au cours dudit intervalle de temps avec une série de valeurs de référence mise en mémoire grâce aux moyens de mise en mémoire 32 d'une unité autonome 20, les moyens de détection de défaut de fonctionnement de chaque unité autonome 20 peuvent détecter si le signal lumineux qu'ils reçoivent du point lumineux 10 a une fréquence sensiblement différente de la fréquence d'alimentation électrique, auquel cas un signal de défaillance dudit point lumineux est communiqué au coordonnateur 22.

De plus, le coordonnateur du dispositif communicant est en mesure d'identifier le point lumineux ayant un mauvais fonctionnement : l'unité autonome 20 communicant son identité audit coordonnateur 22 simultanément au signal de détection de défaut de fonctionnement.

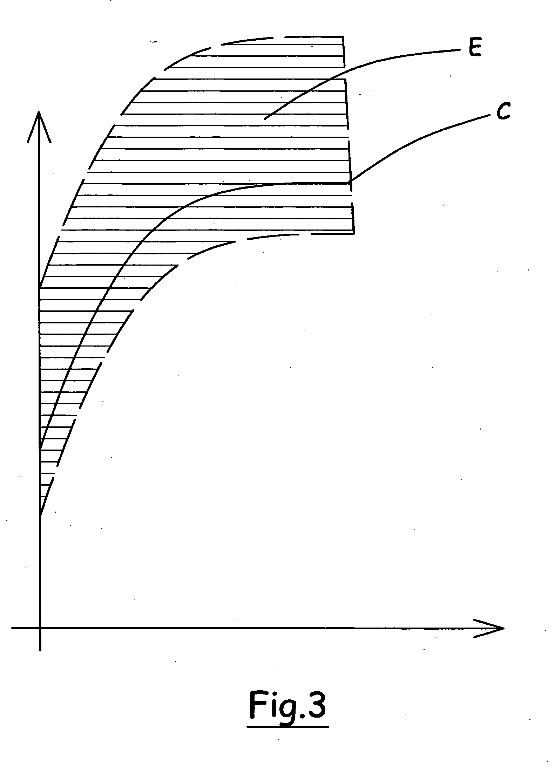

Selon une deuxième variante de la détection de défaut d'un point lumineux 10, l'unité autonome 20 dispose de moyens de détection d'un défaut d'allumage, cette détection consistant pour les moyens de détection d'un défaut d'allumage à surveiller la courbe d'allumage du point lumineux 10. Sur le même principe que la détection de défaut précédente, et comme illustré en figure 3, une courbe d'allumage de référence *C* est comparée à une courbe d'allumage établie, lors de chaque allumage du point lumineux 10, par les moyens de détection d'un défaut d'allumage de l'unité autonome 20, la courbe d'allumage de référence C étant notamment issue des moyens de mise en mémoire 32. La méthode de détection consiste donc à vérifier que la courbe obtenue lors de l'allumage du point lumineux 10 est située dans une enveloppe E englobant la courbe d'allumage de référence *C*. En cas de sortie de la courbe d'allumage de ladite enveloppe, la taille de l'enveloppe E étant paramétrable, l'unité autonome 20 communique un signal de défaillance d'allumage au coordonnateur 22 de la même façon que pour la détection de défaut de fonctionnement d'un point lumineux 10.

Le coordonnateur 22 du dispositif communicant est en mesure d'identifier le point lumineux 10 ayant un allumage anormal : l'unité autonome 20 communicant son identité audit coordonnateur 22 simultanément au signal de détection de défaut d'allumage.

Selon une troisième variante de la détection de défaut d'un point lumineux 10, l'unité autonome 20 dispose de moyens de détection de la dérive d'éclairage d'un point lumineux, le flux lumineux d'un dispositif d'éclairage étant susceptible de varier au cours du temps mais aussi en fonction de la température. Cette détection est basée sur une observation régulière de l'intensité lumineuse émise par le point lumineux. En effectuant une série de mesures de luminosité régulièrement et en comparant la dite série de valeurs mesurées avec une série de valeurs de référence mise en mémoire grâce aux moyens de mise en mémoire 32 d'une unité autonome 20, les moyens de détection de la dérive d'éclairage d'un point lumineux peuvent détecter si le flux lumineux qu'ils reçoivent du point lumineux 10 a une intensité sensiblement décroissante, auquel cas un signal de défaillance dudit point lumineux est communiqué au coordonnateur 22, qui peut compenser ladite dérive d'éclairage constatée en transmettant un ordre aux moyens de commande 12 du réseau d'éclairage.

Selon un mode réalisation de l'unité autonome lorsque cette dernière n'est pas intégrée dans le candélabre, les moyens de mesure de luminosité 18 sont disposés et orientés, grâce aux moyens de fixation 26 de l'unité autonome 20 sur le point lumineux 10, notamment sous la lanterne d'éclairage d'un point lumineux, de façon à mesurer l'ensoleillement mais aussi de façon à assurer la détection de défaut d'un point lumineux 10. Dans ce mode de réalisation préféré de l'unité autonome 20, les moyens de mesure de luminosité 18, destinés à mesurer l'ensoleillement, assurent donc le rôle des moyens de détection de défaut de fonctionnement et d'allumage. Cela permet de limiter le nombre d'éléments consommateurs d'énergie et favorise ainsi l'autonomie de l'unité autonome 20.

En variante, l'unité autonome 20 peut être intégrée dans le candélabre et être rapportée sur un circuit imprimé sur lequel sont prévues par exemple des LED. Dans ce cas, les moyens de mesure de luminosité 18 peuvent se présenter sous la forme d'un élément photosensible, notamment d'une diode photosensible.

Selon un troisième mode de réalisation amélioré de l'unité autonome 20, une unité autonome dispose de moyens de mesure de l'activité 34, intégrés à l'unité autonome 20 et susceptibles de détecter l'activité présente sous le point lumineux 10, le terme activité désignant le passage d'un véhicule ou d'un piéton.

Ces moyens de mesure de l'activité 34 sont orientés de manière à mesurer la luminosité au sol et disposent d'un champ de mesure de luminosité sensiblement équivalent à la zone B à éclairer par le point lumineux 10. Le principe de cette mesure de l'activité est basée sur l'écart séparant des mesures de luminosité au sol de référence, prises périodiquement sur un intervalle de temps choisi et correspondant à une zone B inoccupée, et des mesures de luminosité au sol effectuées sur ledit intervalle de temps durant lequel on veut contrôler ladite activité présente sous le point lumineux 10, notamment lorsque ce dernier est allumé. Le passage d'un véhicule ou d'un piéton modifiant la luminosité au sol projetée par le point lumineux 10, les moyens de mesure de l'activité 34 mesurent les éventuels écarts entre les mesures de luminosité au sol de référence, notamment stockées par les moyens de mise en mémoire 32 de l'unité autonome 20, et les mesures de luminosité au sol effectuées sur l'intervalle de temps à contrôler. Le coordonnateur 22 du dispositif communicant rassemble les éventuels écarts de luminosité au sol mesurés par les moyens de mesure de l'activité 34 d'au moins une unité autonome 20 du réseau d'éclairage, et, en fonction de ces données et de ses paramètres intrinsèques, il transmet un ordre aux moyens de commande 12 centralisés du réseau d'éclairage pour influer par la suite sur le circuit de puissance 14 dudit réseau afin d'adapter la luminosité fournie par le réseau d'éclairage à l'activité mesurée sous les points lumineux 10. Avantageusement, ces moyens de mesure de l'activité 34 peuvent être utilisés pour la mise en place d'une gestion de l'éclairage en fonction de l'activité, en plus d'une gradation paramétrable de l'éclairage. En période de faible éclairage, la mesure de variations de la lumière ambiante permet de détecter un mouvement et donc une présence. Cette détection est utilisée pour augmenter l'éclairage pendant une durée donnée.

Dans un quatrième mode de réalisation de l'unité autonome 20 du dispositif communicant, le même dispositif de mesure de luminosité est utilisé en tant que moyens de mesure de luminosité 18 pour effectuer une mesure d'ensoleillement point par point, en tant que moyens de détection de défaut, et en tant que moyens de mesure de l'activité 34 présente sous les points lumineux 10.

Dans un autre mode réalisation de l'unité autonome, l'unité autonome 20 et ses moyens de mesure de luminosité 18 sont intégrés à au moins une lanterne d'éclairage d'un point lumineux 10, notamment dans l'enceinte formée par la coque d'une lanterne d'éclairage d'un point lumineux. Dans ce mode de réalisation de l'unité autonome 20, les moyens de mesure de luminosité 18 sont toujours susceptibles de mesurer l'ensoleillement et d'assurer le rôle de moyens de détection de défaut de fonctionnement et d'allumage. Cela permet de limiter le nombre d'éléments disposés sur le candélabre et de dissimuler ladite unité autonome 20.

Tous ces modes de réalisation de l'unité autonome 20 permettent au procédé de gestion du réseau d'éclairage selon l'invention d'apporter des améliorations en terme de qualité d'éclairage.

Comme illustré sur la figure 2, le réseau d'éclairage peut être équipé de moyens de variation de l'intensité lumineuse 16, susceptibles de faire varier la lumière fournie par les points lumineux 10 du réseau d'éclairage. Généralement, lesdits moyens de variation de l'intensité lumineuse 16 sont disposés au départ du circuit de puissance 14 du réseau d'éclairage et sont commandés par les moyens de commande 12 dudit réseau. Ces moyens de variation de l'intensité lumineuse 16 ne sont pas développés plus amplement car bien connu de l'homme du métier.

Selon un premier mode de réalisation de la variation d'intensité lumineuse du réseau d'éclairage, les mesures de luminosité point par point, réalisées par chaque unité autonome 20, vont fournir au coordonnateur 22 une évolution de l'ensoleillement, croissante ou décroissante, à laquelle ledit coordonnateur 22 fait correspondre une valeur d'intensité lumineuse minimale à fournir. A partir de cette valeur d'intensité lumineuse minimale à fournir, le coordonnateur 22 peut transmettre un ordre aux moyens de commande 12 du réseau, dont l'intensité lumineuse est modifiée par l'intermédiaire des moyens de variation de l'intensité lumineuse 16. Concrètement, ce premier mode de réalisation de la variation d'intensité lumineuse permet d'obtenir un éclairage dont l'intensité varie proportionnellement à l'ensoleillement, et donc susceptible de générer des économies d'énergie.

Selon un deuxième mode de réalisation de la variation d'intensité lumineuse du réseau d'éclairage, les écarts mesurés par les moyens de mesure de l'activité 34 et collectés par le coordonnateur 22, au fil de l'utilisation du procédé selon l'invention et notamment par les moyens de mise en mémoire 32 de chaque unité autonome 20, vont lui permettre d'établir une cartographie de l'activité. En fonction de cette cartographie et de ses paramètres intrinsèques, le coordonnateur 22 fait correspondre une valeur d'intensité lumineuse à fournir par le réseau d'éclairage. A partir de cette valeur d'intensité lumineuse à fournir, le coordonnateur 22 peut transmettre un ordre aux moyens de commande 12 du réseau, dont l'intensité lumineuse est modifiée par l'intermédiaire des moyens de variation de l'intensité lumineuse 16.

Cette dernière utilisation de la variation d'intensité lumineuse du procédé de gestion vise à économiser l'énergie consommée par les réseaux d'éclairage, et plus particulièrement à éviter certaines situations de l'art antérieur où des points lumineux situés dans des zones à éclairer n'ayant que peu voire aucune activité ou fréquentation nocturnes, telles les zones industrielles ou commerciales, éclairent des lieux déserts une grande partie de la nuit, l'éclairage dans ces zones n'étant finalement utile qu'au début et à la fin de la nuit.

Les avantages de ce procédé de gestion d'un réseau d'éclairage public en terme de qualité d'éclairage et d'économie d'énergie reposent sur le dispositif communicant associé audit procédé et notamment sur la conception des unités autonomes 20. Ce procédé de gestion d'un réseau d'éclairage ne peut être envisagé qu'après disposition d'un coordonnateur 22 associé aux moyens de commande 12 dudit réseau et surtout d'au moins une unité autonome 20 par point lumineux 10 dudit réseau.

Dans la suite de la description, l'unité autonome 20 est décrite selon son mode de réalisation préférentiel, comprenant les caractéristiques essentielles au déploiement d'un procédé de gestion d'un réseau d'éclairage selon l'invention. Cependant, d'autres éléments, notamment des capteurs ou instruments de mesure, peuvent être envisagés, profitant ainsi de l'aspect communicant du dispositif pour permettre une collecte de mesures sur la zone couverte par ledit réseau d'éclairage.

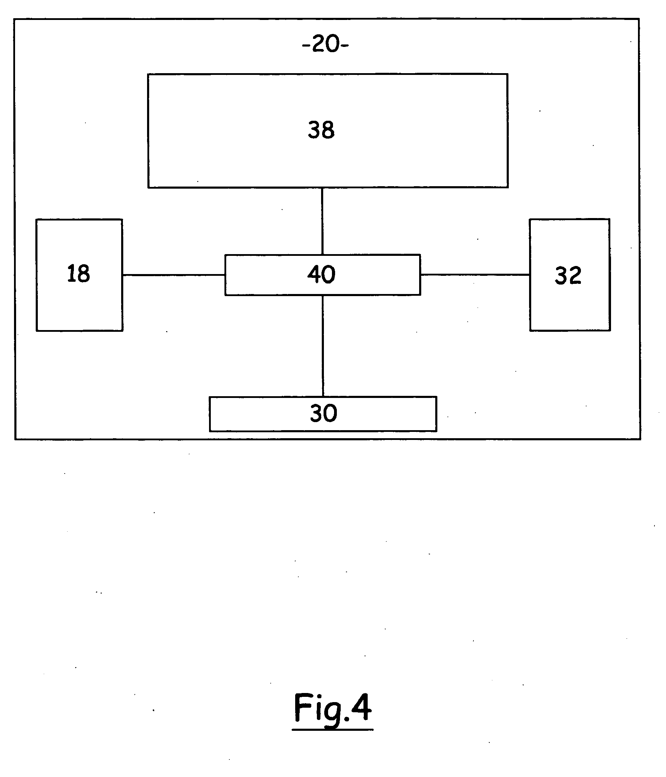

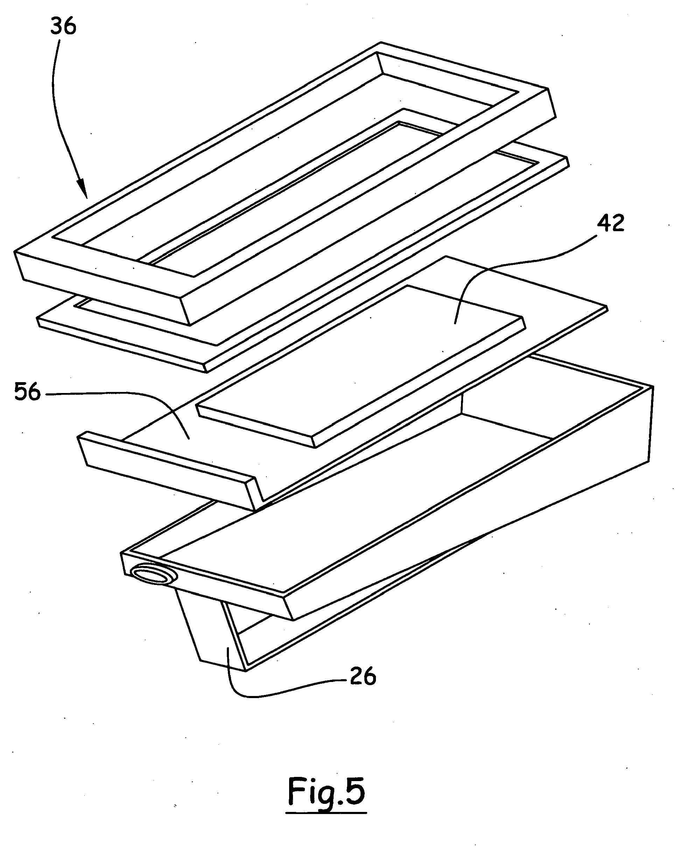

Selon un premier mode de réalisation, illustré en figures 4 et 5, une unité autonome 20 se compose d'un boîtier étanche 36, comprenant :
- des moyens de fixation 26,
- des moyens d'alimentation autonome 38,
- des moyens de mise en mémoire 32,
- des moyens de communication 30,
- des moyens de mesure de luminosité 18,
- des moyens d'exécution d'instructions 40,
- et éventuellement, des moyens de commande d'une unité externe.

Dans une unité autonome 20, les moyens d'alimentation autonome 38 fournissent l'énergie nécessaire aux moyens de mesure de luminosité 18, aux moyens de communication 30, aux moyens de mise en mémoire 32 et aux moyens d'exécution des instructions 40. Ainsi, après réception des instructions issues du coordonnateur 22 par l'intermédiaire des moyens de communication 30, les moyens d'exécution d'instructions 40 opèrent des mesures de luminosité grâce aux moyens de mesure de luminosité 18. Ensuite, suivant les instructions reçues, les moyens d'exécution des instructions stockent lesdites mesures effectuées dans les moyens de mise en mémoire 32 ou les renvoient au coordonnateur 22 par l'intermédiaire des moyens de communication 30.

Selon un mode de réalisation, les moyens d'alimentation autonome 38 comprennent des moyens de transformation d'une énergie extérieure 42, notamment solaire, en énergie électrique et des moyens de stockage de ladite énergie électrique.

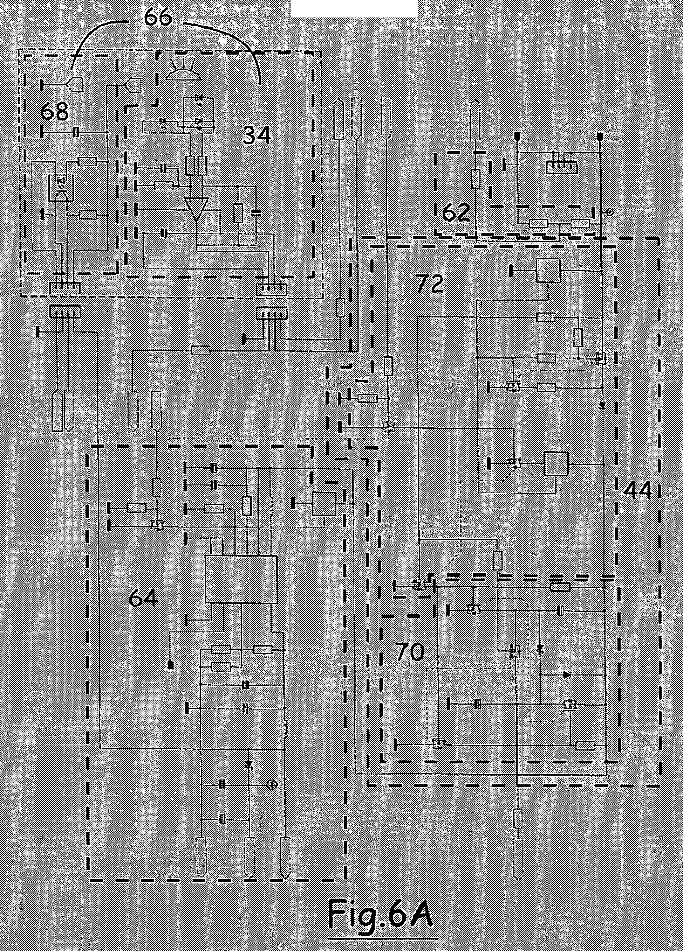

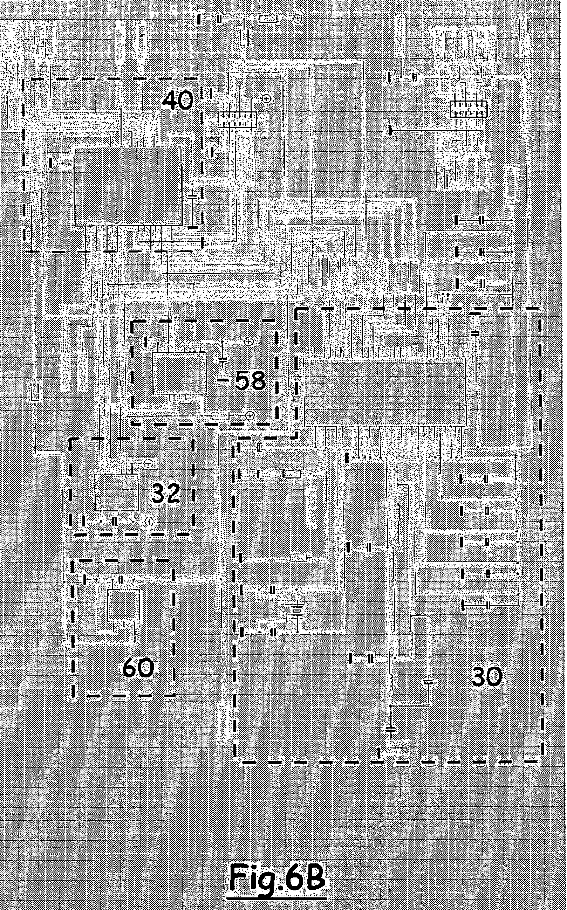

Comme l'illustrent les figures 6A et 6B, l'unité autonome contient un circuit imprimé 56 regroupant les moyens de stockage de l'énergie électrique 44, les moyens de communication 30 de l'unité autonome 20, les moyens d'exécution des instructions 40 et les moyens de mise en mémoire 32, ainsi que des moyens de synchronisation 58, des moyens de calibrage des mesures de luminosité 62, des moyens de régulation de l'alimentation électrique 64 et, éventuellement, des moyens de mesure de température 60 et un module 66 comprenant les moyens de mesure de l'activité 34 et des moyens secondaires de communication 68.

Les moyens de calibrage des mesures de luminosité 62 sont utilisés pour calibrer la valeur de la tension fournie par les moyens de transformation d'une énergie extérieure 42, tension qui est directement proportionnelle à l'ensoleillement d'où son utilisation en tant que moyens de mesure de luminosité 18. Ces moyens de calibrage 62 sont notamment réalisés à l'aide d'un pont diviseur de tension. La tension ainsi obtenue, proportionnelle à l'ensoleillement et ajustée, est transmise aux moyens d'exécution des instructions 40.

Afin de permettre le fonctionnement des différents éléments situés sur le circuit imprimé 56 et le module 66, la tension fournie par lesdits moyens de transformation d'une énergie extérieure 42 doit être stockée et régulée de manière à fournir une alimentation stable auxdits différents éléments du circuit imprimé et du module 66. A ce titre les moyens de stockage de l'énergie 44 sont relayés par les moyens de régulation 64 de l'alimentation électrique. Lesdits moyens de régulation 64 de l'alimentation électrique sont notamment réalisés à l'aide d'un convertisseur continu/continu.

L'alimentation électrique fournit l'énergie électrique, nécessaire aux moyens d'exécution des instructions 40, notamment un microprocesseur, aux moyens de synchronisation 58, notamment un circuit intégré d'horloge temps réel programmable, aux moyens de mise en mémoire 32, notamment de type EEPROM, aux moyens de mesure de température 60, notamment un circuit intégrant une sonde de température, aux moyens de communication 30, notamment un circuit intégré émetteur-récepteur d'ultra hautes fréquences correspondant à la norme IEEE802.15.4, dite ZigBee, fonctionnant à basse tension, et au module 66 intégrant les moyens de mesure de l'activité 34, notamment au moins une photodiode de grande sensibilité et de grande rapidité de réponse, et des moyens secondaires de communication 68, notamment un émetteur-récepteur optique destiné à l'émission-réception des informations et des instructions.

Les moyens de mise en mémoire 32, notamment de type EEPROM, sont utilisés pour stocker les informations propres à chaque point lumineux 10, qu'il s'agisse d'informations issues des mesures de luminosité, de mesures de température, des mesures de l'activité ou les données relatives à la détection de défaut de fonctionnement ou d'allumage, ainsi que des données envoyées aux moyens d'exécution des instructions 40. Les données ainsi stockées peuvent être réutilisées pour l'établissement d'une courbe de référence d'allumage C par exemple, ou pour l'apprentissage des moyens de mesures de l'activité 34 ou des moyens de détection de défaut de fonctionnement ou des moyens de mesure de température 60.

On désigne par apprentissage, l'établissement d'une base de données de mesures obtenues par les différents moyens de mesure disponibles dans une unité autonome 20 et disponibles dans les moyens de mise en mémoire 32, cette base de données permettant d'établir une cartographie desdites mesures à une échelle temporelle par exemple pouvant être horaire, quotidienne, hebdomadaire ou permettant de croiser les différentes mesures entre elles et d'en déduire d'éventuelles relations, tout cela dans le but d'améliorer la gestion du réseau d'éclairage.

Les avantages procurés par ce procédé de gestion d'un réseau d'éclairage sont dépendants d'un protocole de communication, plus particulièrement radio, adapté au mode de fonctionnement à basse tension des unités autonomes 20 nécessaires à l'installation dudit procédé sur un réseau d'éclairage. De par l'autonomie des unités autonomes 20, ce protocole de communication est à faible niveau de consommation d'énergie. Cette faible consommation d'énergie est basée sur les moyens de synchronisation 58 programmable qui définissent un fonctionnement horodaté des unités autonomes 20, basé sur une méthode de requête/réponse périodique de chaque unité autonome 20, ce protocole de communication étant donc horodaté.

De préférence, les moyens de synchronisation 58 se présentent sous la forme d'un circuit intégré à horloge temps réel dont les déviations de fréquences de l'oscillateur à quartz dues aux variations de température peuvent être compensées, permettant ainsi d'obtenir un horodatage fiable avec une dérive négligeable dans le temps.

De manière à synchroniser les unités autonomes 20 entre elles, le protocole de communication prévoit un intervalle de temps périodique de synchronisation durant lequel les unités autonomes se synchronisent deux à deux grâce aux moyens de synchronisation 58 programmable, les moyens de synchronisation 58 permettant aux unités autonomes de se synchroniser entre elles ou avec le coordonnateur 22, et par le biais de leurs moyens de communication 30.

Le protocole est bidirectionnel dans le sens où la transmission du signal s'effectue de façon descendante puis montante sur le réseau d'unités autonomes 20. Le protocole définit une méthode de communication réalisée de manière à ce que, lors de la phase descendante, le signal émis par les moyens de communication 28 du coordonnateur 22, notamment un émetteur-récepteur radio, soit retransmis aux moyens de communication 30 d'une première unité autonome 20, notamment celle située le plus en amont du réseau à proximité du coordonnateur 22, puis successivement d'unité autonome 20 en unité autonome en descendant sur le réseau, jusqu'à la dernière unité autonome 20 dudit réseau, située la plus en aval, et, lors de la phase montante succédant une phase descendante, le signal remonte le réseau d'aval en amont, d'unité autonome 20 en unité autonome, jusqu'à revenir au coordonnateur 22.

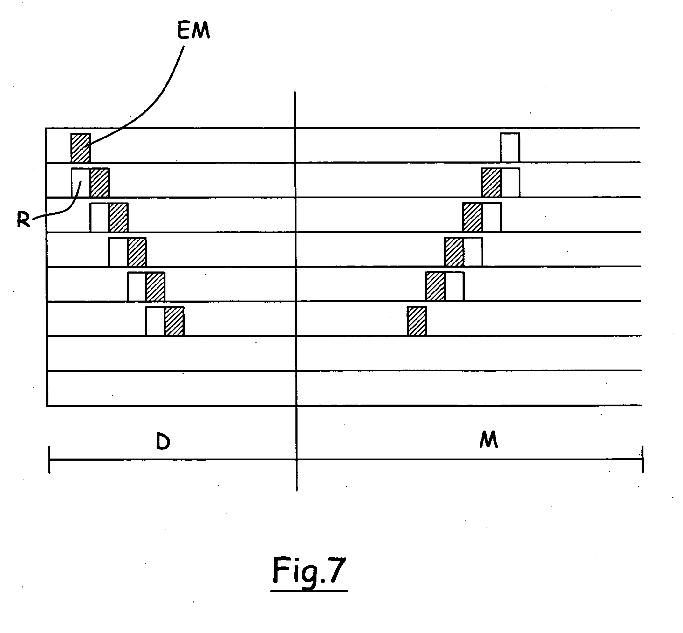

Lors d'une phase montante M ou descendante D et grâce aux moyens de synchronisation 58, l'unité autonome 20 sait à quel moment elle doit se trouver en réception, référencée R en figure 7. Durant cette période de réception R, les moyens de communication se mettent en écoute et sont donc susceptibles de recevoir un signal d'un émetteur ainsi que les instructions qu'il contient.

En suivant la période de réception R et après la fin de la réception du signal, les moyens de communication transmettent à leur tour le signal, durant une période d'émission EM, aux moyens de communication de l'unité autonome se trouvant en période de réception.

Durant la période de réception R de la phase descendante D, les moyens d'exécution 40 effectuent les instructions transmises dans le signal, notamment des mesures, puis durant la période d'émission EM de la phase montante M, ils transmettent les données répondants aux instructions aux moyens de communication 30.

Ainsi, et comme illustré sur la figure 7, le protocole est dit bidirectionnel à balises.

Le protocole est dit à balises car chaque unité autonome émet une balise, ou message, à une période d'émission EM bien précise, portant l'identifiant du réseau, l'identifiant de l'émetteur, le numéro de l'intervalle de temps, la date et l'heure. La balise est le moyen utilisé par chaque unité autonome 20 pour effectuer sa synchronisation avec une autre unité autonome 20 ou le coordonnateur 22, ladite synchronisation s'effectuant par couples. La précision temporelle de la période d'émission EM est indispensable pour éviter que des variations brutales entraînent le décrochage de la queue du réseau Ladite précision de la période d'émission EM dépend de la stabilité d'horloge de chaque unité autonome 20, cette stabilité étant obtenue en compensant en température grâce aux moyens de mesure de température 60 l'horloge de haute précision définie par les moyens de synchronisation 58 programmable.

Pour augmenter le trafic de données pouvant transiter, le protocole de communication utilise plusieurs fréquences de transmission de signal, une fréquence étant toutefois réservée pour effectuer la synchronisation ou la resynchronisation des unités autonomes 20 entre elles.

Cette fréquence de synchronisation est utilisée pour créer un canal sémaphore qui sert à la re-synchronisation d'une unité autonome 20.

En cas d'isolement d'une unité autonome 20, celle-ci effectue sa propre recherche de synchronisation. Une unité autonome 20 se déclare isolée lorsqu'elle ne voit plus de balise plusieurs fois de suite. On distingue trois modes de recherche de synchronisation à partir de l'auto déclaration d' isolement. Un mode rapide qui consiste à rester en période de réception pour l'unité autonome 20 isolée après la phase montante M pour trouver la phase de signalisation du canal sémaphore, la probabilité de trouver la balise de signalisation étant directement liée à la qualité du signal. Au delà du délai de présence du canal sémaphore, étant donné qu'il est inutile de continuer la recherche, l'unité autonome 20 isolée passe alors dans le mode de recherche lent qui consiste à attendre le prochain cycle d'émission réception pour scanner le canal sémaphore dans un délai équivalent à celui de la recherche rapide. Le dernier mode de recherche est établi à chaque tranche horaire où une unité autonome 20 ayant perdu le canal qui lui est rattaché va effectuer une séquence rapprochée à la seconde de cycles de synchronisation, pendant une minute pour donner un ordre d'idées.

Lors de la première identification, une relation parent enfant se crée entre l'unité autonome 20 en recherche, dite enfant, et l'unité autonome 20 ou le coordonnateur 22, dite ou dit parent, qui l'accepte comme élément du réseau. Le parent inscrit dans ses moyens de mise en mémoire 32 les coordonnées de son nouvel enfant. De même l'enfant inscrit dans ses moyens de mise en mémoire 32 les coordonnées de son parent. Lors de l'isolement d'un enfant celui ci effectue une procédure dite orpheline pour retrouver son parent, la procédure de raccordement au réseau et celle de la resynchronisation étant basées sur les méthodes fixées par la norme IEEE802.15.4.

Au delà de la procédure orpheline, une unité autonome 20 se retrouve complètement isolée et peut alors effacer les coordonnées mémorisées par les moyens de mise en mémoire 32 pour effectuer une procédure de raccordement au réseau, cette procédure intervenant dans le cas de la disparition du parent correspondant à une destruction ou un remplacement d'une unité autonome 20.

Le rattachement à un parent est une relation privilégiée stable. Il n'y a pas de raison pour changer de parent.

Une unité autonome parent peut accepter plusieurs unités autonomes enfants, ceci faisant partie des paramètres de fabrication. Chaque unité autonome enfant est identifiée séparément. Tous les unités autonomes enfants écoutent la même unité autonome parent lors du même intervalle de temps. Les différentes unités autonomes enfants de la même unité autonome parent travaillent ensuite sur leur propre intervalle de temps et ne se voient pas.

## Revendications

1. Procédé de gestion d'un réseau d'éclairage comprenant des points lumineux (10) disposés sur une zone A à éclairer et reliés à des moyens de commande (12) centralisés, disposés en un point unique, pilotant le circuit de puissance (14) dudit réseau d'éclairage, ledit réseau d'éclairage étant équipé d'un dispositif comprenant des moyens de mesure de luminosité, (18) au niveau de chaque point lumineux (10) dudit réseau, ledit procédé est **caractérisé en ce que**, ses étapes consistent à :
- effectuer au moins une mesure de luminosité en chaque point lumineux (10) grâce aux moyens de mesure de luminosité (18);
- communiquer ladite au moins une mesure de luminosité effectuée par les moyens de mesure de luminosité (18) en chaque point lumineux (10) aux moyens de commande (12) dudit réseau d'éclairage:
- foire varier, grâce aux moyens de commande (12) centralisés et grâce a le circuit de puissance (14) du réseau d'éclairage l'intensité de la luminosité fournie par chacun des points lumineux (10) du réseau d'éclairage en fonction des mesures de luminosité effectuées en chaque point lumineux (10).

2. Procédé de gestion d'un réseau d'éclairage selon la revendication 1, ledit procédé est **caractérisé en ce qu'**il consiste à :
- mémoriser au moins une mesure de luminosité de référence effectuée en chaque point lumineux dans des moyens de mise mémoire (32) prévus au niveau de chaque point lumineux (10);
- effectuer des mesures de luminosité durant le fonctionnement et/ou l'allumage du point lumineux (10) grâce aux moyens de mesure de luminosité (18);
- comparer les différences entre des valeurs de référence, stockées dans les moyens de mise mémoire (32) prévus au niveau de chaque point lumineux (10), et les valeurs mesurées durant le fonctionnement et/ou l'allumage du point lumineux (10) ;
- en cas de différences sensibles communiquer un signal de défaillance aux moyens de commande (12) dudit réseau simultanément à l'identité du point lumineux (10) défectueux.

3. Procédé de gestion d'un réseau d'éclairage selon la revendication 1 ou 2, **caractérisé en ce que** ledit procédé consiste à :
- effectuer au moins une mesure de l'activité au niveau d'au moins un point lumineux (10) dudit réseau:
- communiquer ladite au, moins une mesure de l'activité aux moyens de commande (12) dudit réseau d'éclairage ;
- faire varier, grâce aux moyens de commande (12) et de manière synchronisée, l'intensité de la luminosité fournie par chacun des points lumineux (10) du réseau d'éclairage en fonction des mesures de l'activité (34) effectuées en chaque point lumineux (10).

4. Dispositif de gestion d'un réseau d'éclairage comprenant des points lumineux (10) disposés sur une zone A à éclairer et reliés à des moyens de commande (12) centralisés, disposés en un point unique, pilotant le circuit de puissance (14) dudit réseau d'éclairage, et des moyens de mesure de luminosité (18) au niveau de chaque point lumineux (10) dudit réseau, ledit dispositif étant **caractérisé en ce qu'**il comprend un coordonnateur (22) relié aux moyens de commande (12) centralisés et au moins une unité autonome (20) par point lumineux (10) du réseau, chaque unité autonome (20) comprenant les moyens de mesure de luminosité (18) et des moyens de communication (30) aptes à communiquer, directement ou indirectement, lesdites mesures de luminosité aux moyens de communication (28) du coordonnateur (22); et faire varier, grâce aux moyens de commande (12) et grâce a le circuit de puissance (14) du réseau d'éclairage, l'intensité de la luminosité fournie par chacun des points lumineux du réseau d'éclairage en fonction des mesures de luminosité effectuées en chaque point lumineux (19).

5. Dispositif de gestion d'un réseau d'éclairage selon la revendication 4,
**caractérisé en ce que** chaque unité autonome (20) dispose de moyens de mesure de l'activité (34), notamment au moins une photodiode de grande sensibilité et de grande rapidité de réponse.

6. Unité autonome (20) susceptible d'être utilisée dans un dispositif de gestion d'un réseau d'éclairage selon la revendication 4 ou 5, **caractérisée en ce que** l'unité autonome (20) comprend des moyens de mesure de luminosité (18) et des moyens de communication (30) aptes à communiquer, directement ou indirectement, lesdites mesures aux moyens de communication (28) du coordonnateur (22).

7. Unité autonome (20) susceptible d'être utilisée dans un dispositif de gestion d'un réseau d'éclairage et selon la revendication 6, **caractérisée en ce qu'**elle comprend des moyens d'alimentation autonome (38) comprenant des moyens de transformation d'une énergie extérieure (42) en énergie électrique, notamment un panneau photovoltaïque utilisant l'énergie solaire, et des moyens de stockage (44) de la dite énergie ainsi transformée.

8. Unité autonome (20) susceptible d'être utilisée dans un dispositif de gestion d'un réseau d'éclairage et selon la revendication 7, **caractérisée en ce que** les moyens de transformation d'une énergie extérieure (42), notamment un panneau photovoltaïque utilisant l'énergie solaire, sont utilisés en tant que moyens de mesure de luminosité (18) par l'intermédiaire de moyens de calibrage (62) de la tension ainsi fournie.

## Claims

1. A method of managing a lighting system comprising light points (10) disposed on a zone A to be illuminated and connected to centralised control means (12), disposed at a single point, controlling the power circuit (14) of said lighting system, said lighting system being equipped with a device comprising means of measuring the brightness (18) at each light point (10) in said system, said method is **characterised in that** its steps comprise:
- making at least one brightness measurement at each light point (10) by virtue of the brightness measurement means (18);
- communicating said at least one brightness measurement made by the brightness measuring means (18) at each light point (10) to the control means (12) of said lighting system;
- varying, by means of the centralised control means (12) and by means of the power circuit (14) of the lighting system, the intensity of the brightness supplied by each of the light points (10) in the lighting system according to the brightness measurements made at each light point (10).

2. A method of managing a lighting system according to claim 1, said method is **characterised in that** it comprises:
- storing at least one reference brightness measurement made at each light point in storage means (32) provided at each light point (10);
- making brightness measurements during the functioning and/or switching on of the light point (10) by means of the brightness measurement means (18);
- comparing the differences between reference values stored in the storage means (32) provided at each light point (10) and the values measured during the functioning and/or switching on of the light point (10);
- in the case of substantial differences, communicating a fault signal to the control means (12) of said system simultaneously with the identity of the defective light point (10).

3. A method of managing a lighting system according to claim 1 or 2, **characterised in that** said method comprises:
- making at least one measurement of the activity at at least one light point (10) in said system;
- communicating said at least one measurement of the activity to the control means (12) of said lighting system;
- varying, by means of the control means (12) and in a synchronised fashion, the intensity of the brightness supplied by each of the light points (10) in the lighting system according to the measurements of the activity (34) made at each light point (10).

4. A device for managing a lighting system comprising light points (10) disposed on a zone A to be illuminated and connected to centralised control means (12), disposed at a single point, controlling the power circuit (14) of said lighting system, and means (18) of measuring brightness at each light point (10) in said system, said device being **characterised in that** it comprises a coordinator (22) connected to the centralised control means (12) and at least one self-contained unit (20) per light point (10) in the system, each self-contained unit (20) comprising the brightness measuring means (18) and communication means (30) able to communicate said brightness measurements, directly or indirectly, to the communication means (28) of the coordinator (22); and varying, by means of the control means (12) and by means of the power circuit (14) of the lighting network, the intensity of the brightness supplied by each of the light points in the lighting system according to the brightness measurements made at each light point (19).

5. A device for managing a lighting network according to claim 4, **characterised in that** each self-contained unit (20) has means (34) of measuring the activity, in particular at least one high-sensitivity photodiode with a very fast response.

6. A self-contained unit (20) able to be used in a device for managing a lighting system according to claim 4 or 5, **characterised in that** the self-contained unit (20) comprises brightness measurement means (18) and communication means (30) able to communicate said measurements, directly or indirectly, to the communication means (28) of the coordinator (22).

7. A self-contained unit (20) able to be used in a management device of a lighting system and according to claim 6, **characterised in that** it comprises self-contained power supply means (38) comprising means of converting external energy (42) into electrical energy, in particular a photovoltaic panel using solar energy, and means (44) of storing said energy thus converted.

8. A self-contained unit (20) able to be used in a lighting system management device and according to claim 7, **characterised in that** the means of converting external energy (42), in particular a photovoltaic panel using solar energy, are used as brightness measurement means (18) via means (62) of calibrating the voltage thus supplied.

## Patentansprüche

1. Verfahren zur Steuerung eines Beleuchtungsnetzes mit Lichtpunkten (10), die über einem zu beleuchtenden Bereich A angeordnet und mit an einer einzigen Stelle angeordneten, zentralisierten Steuermitteln (12) verbunden sind, welche den Leistungsstromkreis (14) des Beleuchtungsnetzes steuern, wobei das Beleuchtungsnetz mit einer Vorrichtung ausgestattet ist, die Mittel zum Messen der Helligkeit (18) im Bereich eines jeden Lichtpunktes (10) des Netzes umfasst, wobei das Verfahren **dadurch gekennzeichnet ist, dass** seine Schritte darin bestehen:
- wenigstens eine Helligkeitsmessung an jedem Lichtpunkt (10) mit Hilfe der Helligkeitsmessmittel (18) durchzuführen,
- die mit den Helligkeitsmessmitteln (18) an jedem Lichtpunkt (10) durchgeführte wenigstens eine Helligkeitsmessung an die Steuermittel (12) des Beleuchtungsnetzes zu übertagen,
- mit Hilfe der zentralisierten Steuermittel (12) sowie mit Hilfe des Leistungsstromkreises (14) des Beleuchtungsnetzes die Stärke der durch einen jeden der Lichtpunkte (10) des Beleuchtungsnetzes gelieferten Helligkeit in Abhängigkeit der an jedem Lichtpunkt (10) durchgeführten Helligkeitsmessungen zu ändern.

2. Verfahren zur Steuerung eines Beleuchtungsnetzes nach Anspruch 1, wobei das Verfahren **dadurch gekennzeichnet ist, dass** es darin besteht:
- wenigstens eine an jedem Lichtpunkt durchgeführte Referenzhelligkeitsmessung in Speichermitteln (32), die im Bereich eines jeden Lichtpunktes (10) vorgesehen sind, zu speichern,
- während des Betriebs und/oder Einschaltens des Lichtpunktes (10) Helligkeitsmessungen mit Hilfe der Helligkeitsmessmittel (18) durchzuführen,
- die Unterschiede zwischen Referenzwerten, welche in den im Bereich eines jeden Lichtpunktes (10) vorgesehenen Speichermitteln (32) gespeichert sind, und den während des Betriebs und/oder Einschaltens des Lichtpunktes (10) gemessenen Werten zu vergleichen,
- im Fall von deutlichen Unterschieden, den Steuermitteln (12) des Netzes ein Ausfallsignal sowie gleichzeitig die Identität des defekten Lichtpunktes (10) zu übermitteln.

3. Verfahren zur Steuerung eines Beleuchtungsnetzes nach Anspruch 1 oder 2, **dadurch gekennzeichnet, dass** das Verfahren darin besteht:
- wenigstens eine Messung der Aktivität im Bereich wenigstens eines Lichtpunktes (10) des Netzes durchzuführen,
- die wenigstens eine Aktivitätsmessung an die Steuermittel (12) des Beleuchtungsnetzes zu übertragen,
- mit Hilfe der Steuermittel (12) sowie synchron die Stärke der durch einen jeden der Lichtpunkte (10) des Beleuchtungsnetzes gelieferten Helligkeit in Abhängigkeit der an jedem Lichtpunkt (10) durchgeführten Aktivitätsmessungen (34) zu ändern.

4. Vorrichtung zur Steuerung eines Beleuchtungsnetzes, mit Lichtpunkten (10), die über einem zu beleuchtenden Bereich A angeordnet und mit an einer einzigen Stelle angeordneten, zentralisierten Steuermitteln (12) verbunden sind, welche den Leistungsstromkreis (14) des Beleuchtungsnetzes steuern, sowie Mitteln zur Messung der Helligkeit (18) im Bereich eines jeden Lichtpunktes (10) des Netzes, wobei die Vorrichtung **dadurch gekennzeichnet ist, dass** sie einen mit den zentralisierten Steuermitteln (12) verbundenen Koordinator (22) sowie wenigstens eine unabhängige Einheit (20) pro Lichtpunkt (10) des Netzes umfasst, wobei jede unabhängige Einheit (20) die Helligkeitsmessmittel (18) sowie Kommunikationsmittel (30) umfasst, welche geeignet sind, die Helligkeitsmessungen direkt oder indirekt an die Kommunikationsmittel (28) des Koordinators (22) zu übertragen, und mit Hilfe der Steuermittel (12) sowie mit Hilfe des Leistungsstromkreises (14) des Beleuchtungsnetzes die Stärke der durch einen jeden der Lichtpunkte des Beleuchtungsnetzes gelieferten Helligkeit in Abhängigkeit der an jedem Lichtpunkt (10) durchgeführten Helligkeitsmessungen zu ändern.

5. Vorrichtung zur Steuerung eines Beleuchtungsnetzes nach Anspruch 4, **dadurch gekennzeichnet, dass** jede unabhängige Einheit (20) über Mittel zum Messen der Aktivität (34), insbesondere wenigstens eine hochempfindliche und schnell ansprechende Fotodiode verfügt.

6. Unabhängige Einheit (20), die geeignet ist, in einer Vorrichtung zur Steuerung eines Beleuchtungsnetzes nach Anspruch 4 oder 5 verwendet zu werden, **dadurch gekennzeichnet, dass** die unabhängige Einheit (20) Helligkeitsmessmittel (18) sowie Kommunikationsmittel (30) umfasst, welche geeignet sind, die Messungen direkt oder indirekt an die Kommunikationsmittel (28) des Koordinators (22) zu übertragen.

7. Unabhängige Einheit (20), die geeignet ist, in einer Vorrichtung zur Steuerung eines Beleuchtungsnetzes verwendet zu werden, sowie nach Anspruch 6, **dadurch gekennzeichnet, dass** sie selbständige Versorgungsmittel (38) aufweist, die Mittel zur Umwandlung einer Fremdenergie (42) in Strom, insbesondere ein die Sonnenenergie nutzendes Photovoltaikpaneel, sowie Mittel (44) zum Speichern der auf diese Weise umgewandelten Energie umfassen.

8. Unabhängige Einheit (20), die geeignet ist, in einer Vorrichtung zur Steuerung eines Beleuchtungsnetzes verwendet zu werden, sowie nach Anspruch 7, **dadurch gekennzeichnet, dass** die Mittel zur Umwandlung einer Fremdenergie (42), insbesondere ein die Sonnenenergie nutzendes Photovoltaikpaneel, über Mittel zum Kalibrieren (62) der auf diese Weise gelieferten Spannung als Helligkeitsmessmittel (18) verwendet werden.
